(19) Europäisches Patentamt
European Patent Office
Office européen des brevets

(11) Publication number: **0 141 473**
**A1**

(12) # EUROPEAN PATENT APPLICATION

(21) Application number: 84201587.7

(22) Date of filing: 05.11.84

(51) Int. Cl.⁴: C 08 L 21/00
C 08 J 3/22
//(C08L21/00, 71:00)

(30) Priority: 09.11.83 DE 3340474
20.01.84 DE 3401843

(43) Date of publication of application:
15.05.85 Bulletin 85/20

(84) Designated Contracting States:
BE CH DE FR GB IT LI NL

(71) Applicant: AKZO N.V.
Velperweg 76
NL-6824 BM Arnhem(NL)

(72) Inventor: Seibert, Karl
Am Hinzenbusch 62
D-5160 Düren-Niederau(DE)

(72) Inventor: Seeberger, Dieter B.
Marseille Strasse 53
D-4156 Willich 1(DE)

(72) Inventor: Seeberger, Ernst F.
Grüner Weg 19
D-5160 Düren(DE)

(74) Representative: Sieders, René et al,
P.O. Box 314
NL-6800 AH Arnhem(NL)

(54) **Vulcanization method.**

(57) Vulcanization of rubber with sulphur using a polyether and at least one conventional accelerator in a concentration below the usual range, i.e. below a value of 1,3% by weight, calculated on the rubber.

Particularly suitable are block polyethers from ethylene oxide and a 1,2-alkylene oxide having 12 to 20 carbon atoms. Further, it is of advantage to have the polyether and the usual accelerator together with other vulcanizing agents added to the rubber in accordance with the master batch procedure. These steps lead to a considerable reduction in the endangerment of health that may be due to the usual accelerators, but have no detrimental effect on vulcanization.

EP 0 141 473 A1

Croydon Printing Company Ltd.

# Vulcanization method

The invention relates to a method of vulcanizing rubber with sulphur, use being made of a polyether and a conventional accelerator.

The use of polyether together with conventional accelerators is well-known in the art of cross-linking the macromolecules of rubber with sulphur. In that process the two substances have different functions.

According to the general literature in the art (see Ullmann's Encyclopädie der technischen Chemie, 4th Edition, 1980, keyword: "polyalkylene glycols") polyethers are used in the rubber industry as dispersing agent, as mould release agent for moulded articles of rubber latex and solid latex, as lubricant both in the plastics and in the rubber processing industry, as emulsifier in the preparation of vinyl-acryl copolymerisates.
Further uses of polyethers in the processing of rubber are described in Ullmann's Encyclopädie der technischen Chemie, 4th Edition, 1977, keyword: "Kauthschukchemicalien und -Zuschlagstoffe": according to which they are used as antistats or as extraordinarily effective plasticizers to impart high elasticity and low temperature flexibility to rubber articles, particularly of nitrile and chloroprene rubbers. Moreover, polyglycol ethers are used as emulsifiers in the processing of latex, because they do not affect the charge of the latex particles.

Finally, the company magazine "Pluriol-E-Marken" of the firm of BASF, Dec. 1979, describes the use in the rubber industry of polyethylene glycol as activating dispersing agent for concentrated fillers. They have a favourable effect on the mechanical properties of rubber blends, such as stress values, tensile strength, elongation at rupture, shock elasticity, tear propagation resistance and hardness. This publication also describes the use of polyethylene glycol as polar additive to rubber blends in ultra-high frequence vulcanization. As little as 10 phr is supposed to be sufficient for the transformation of field energy into vulcanization heat. The principle is particularly recommended for

bright-coloured natural rubber blends and for EPDM-, butyl- and SBR-rubber blends.

Sulphur alone reacts with rubber only very slowly, and only sufficiently at a high dose rate, and elevated temperature and when using a long vulcanization period, and moreover results in unsatisfactory cross-linking efficiency and in unsatisfactory strength and aging properties of the vulcanizates. For these reasons accelerators are added. Under economical conditions these vulcanization accelerators lead to good vulcanizates. Well-known vulcanization accelerators are, for example, 2-mercaptobenzothiazole, dibenzothiazyl disulphide, zinc salt of 2-mercaptobenzothiazole, benzothiazyl-2-cyclohexyl sulphenamide, benzothiazyl-2-tert. butylsulphenamide, benzothiazyl-2-sulphene morpholide, benzothiazyl-dicyclohexylsulphenamide, diphenyl guanidine, di-orthotolyl guanidine, ortho-tolyl biguanide, tetramethyl thiuram disulphide, tetramethyl thiuram monosulphide, tetraethyl thiuram disulphide, dipentamethylene thiuram tetrasulphide, dipentamethylene thiuram hexasulphide, dihexamethylene thiuram tetrasulphide, dihexamethylene thiuram hexasulphide, zinc-N-dimethyl dithiocarbamate, zinc-N-diethyl dithiocarbamate, zinc-N-dibutyl dithiocarbamate, zinc-N-ethylphenyl dithiocarbamate, zinc-N-pentamethylene dithiocarbamate, ethylene thiourea, diethyl thiourea, diphenyl thiourea.

The accelerators are generally used in a concentration of 1,5 to 10 per cent by weight, based on the rubber. As a result, the cross-linking reaction of the rubber is reduced to a few minutes or even seconds at a relatively low temperature. Below 1,5 per cent by weight the vulcanization times for rubber articles become uneconomically long (about 15-40 minutes).

The accelerator concentration to be used, however, also depends on the nature and the amount of filler added. For the filler partly absorbs the vulcanization accelerator and thereby reduces its activity. To take full advantage of the accelerator, however, so-called accelerator-activators are added, such as diethylene glycol or triethanolamine. These substances serve to inhibit the detrimental effect on the vulcanization accelerators; in themselves, however, they have no accelerating effect on the

vulcanization process.

In principle, the above-mentioned accelerator-activators and the vulcanization accelerators may be combined in any way desired. As a result, a great many different accelerator systems may be obtained (one or several accelerators and their activators). They are also needed to meet the various demands made in actual practice on the vulcanization process and the vulcanizates.

When vulcanization methods or vulcanizates are to satisfy new requirements, a skilled man will first of all try to make a suitable choice of known systems. This will be difficult, if not impossible, however, if most of the well-known vulcanization accelerators do not meet these requirements, e.g. if the use of accelerators is to be refrained from because of their being detrimental to health in that they either contain harmful nitroso compounds as impurity or nitroso compounds may be formed from them during vulcanization. To avoid any risks it would be of advantage to refrain from the use of all amine-containing accelerators, or at least to considerably reduce their concentration and to avoid health hazards during processing.
For, the chemicals used in the vulcanization process are generally used in the form of a powder. Formation of dust is normally unavoidable and may not only constitute a nuisance but also may affect the health of plant personnel.

To exclude this risk of a dusty environment widely different solutions have been tried out. Powder preparation in paste turned out to be disadvantageous in further processing. Nor did coated powders provide any solution to the dust problem. The most favourable commercial form up to now has been that of granulated blends, the so-called master batches. They are pre-mixed granulates which contain only few constituents of the total mixture.

For example: one or several rubber chemicals may be embedded in a polymer which is compatible with the rubber mass. DL 61 864, US 3 179 637 and FR 1 136 571, for instance, describe the use of, respectively, polyvinyl ether, polyethylene and polyisobutylene as binder for one or more

rubber chemicals. These polymers, however, are not compatible with all types of rubber. DT 2 123 214 describes granulates of blends of rubber chemicals and polymers based on the elastomers ethylene vinyl acetate copolymers or saturated ethylene propylene copolymers; they all especially display unsatifactory storage stability. These granulates particularly readily tend to become deformed or even totally unsuitable under the mechanical loads in the case of normal storage conditions.

The present invention has for its object to provide a novel vulcanization method in which hazards to health as a result of the use of well-known vulcanization accelerators are reduced to the minimum possible extend without detrimental effect on vulcanization. To that end the following alternatives may be considered:

a) preparing a novel accelerator, or
b) preparing an accelerator system having a lowest possible concentration of well-known accelerators, or
c) preparing an accelerator in the form of a storage-stable granulated pre-mixture.

The solution according to the invention appears from the claims. In principle it consists in that as accelerator system a polyether and a commonly applied accelerator are used. In that case the concentration of the usual vulcanization accelerator may be below 1,3 per cent by weight, based on the rubber, without this having any detrimental effect on vulcanization.

The polyethers used according to the invention may be prepared by methods as described before for analogous products, e.g. by Houben Weyl, "Methoden der organischen Chemie", Vol. 14, 24, 4th Ed., 1963, Georg Thieme Verlag, Stuttgart, pp. 436-450; Journal für praktische Chemie, 1965, pp. 300-303; J.A. Oil Chemist Soc., Vol. 38 (1961), pp. 410-418.

Preference is given to homopolyethers and blockpolyethers, particularly blockpolyethers of the general formula I wherein on average
a = 5 to 115, more particularly 8 to 29,
b = 0 to 15, more particularly 0,

c = 1 to 12, $R_1$ = H and $R_2$ = an alkyl radical having 6 to 32, more particularly 10 to 16 carbon atoms.

As examples of suitable monomeric, aliphatic, unsubstituted 1,2-alkylene oxides may be mentioned: 1,2-epoxy hexane, 1,2-epoxy heptane, 1,2-epoxy octane, 1,2-epoxy nonane, 1,2-epoxy decane, 1,2-epoxy undecane, 1,2-epoxy dodecane, 1,2-epoxy tridecane, 1,2-epoxy tetradecane, 1,2-epoxy pentadecane, 1,2-epoxy hexadecane, 1,2-epoxy heptadecane, 1,2-epoxy octadecane, 1,2-epoxy nonodecane, 1,2-epoxy eicosone, 1,2-epoxy uneicosone, 1,2-epoxy docosane, 1,2-epoxy tricosane, 1,2-epoxy tetracosane, 1,2-epoxy pentacosane, 1,2-epoxy hexacosane, 1,2-epoxy heptacosane, 1,2-epoxy octacosane, 1,2-epoxy nonacosane, 1,2-epoxy triacontane, 1,2-epoxy untriacontane and 1,2-epoxy dotriacontane.

Preferred thereof are 1,2-epoxy decane, 1,2-epoxy undecane, 1,2-epoxy dodecane, 1,2-epoxy tridecane and 1,2-epoxy tetradecane because of their high reactivity and the fact that they do not present great handling problems.

Such polyalkylene glycols are disclosed in US 4 312 768. It describes polyethers having a molecular weight of about 1000 to 75 000, prepared by bringing ethylene oxide or ethylene oxide and at least an alkylene oxide having 3 to 4 carbon atoms into reaction with at least one compound containing at least two active hydrogen atoms, followed by conversion with at least one α-olefine oxide having a carbon chain length of about 12 to 18 aliphatic carbon atoms and wherein said α-olefine oxide is present in an amount of 1 to about 20% by weight, based on the total weight of said thickener. Because of its being capable of unexpectedly causing the viscosity of water to increase, this polyether-polyol thickener is used in the preparation of a concentrate for hydraulic fluid of for metalworking fluids in order to impart to water the properties of a lubricating fluid, e.g. resistance to pressure and corrosion inhibition. The concentrates claimed also may be used together with water as a flame retardant fluid which also acts as an excellent lubricant. From an ecological point of view they are superior to the well-known mineral oil or glycol-water mixtures. No mention is made of their use in the rubber industry.

US 4 312 775, which corresponds to a great extent to the European Application 0061822, also describes these copolyethers as thickening agnet. They have a molecular weight of about 1000 to 75 000 and are prepared by reacting (1) ethylene oxide or (2) ethylene oxide and at least one alkylene oxide having 3 to 4 carbon atoms with at least one active hydrogen-containing initiator and subsequently with at least one α-olefine having a carbon chain length of about 12 to about 18 aliphatic carbon atoms and wherein said α-olefin oxide is present in an amount of about 1 to 20 per cent by weight, based on the total weight of said polyether. In the discussion of the prior art the following uses are mentioned for other polyethers: as surfactant having favourable foaming properties, as detergent and as intermediate compound for the preparation of polyurethane. There is no mention of use in a vulcanization process.

Of the various types of rubber it is particularly natural rubber (NR), styrolbutadiene rubber (SBR), polychloroprene (CR), ethylene propylene rubber (EPDM) and polyisoprene (IR) that are of special importance to the present invention. They may be processed as solid rubber and, especially, as latex.

The rubber may be vulcanized either while free of fillers or in the presence thereof. The method according to the invention is particularly suitable for use in the presence of fillers such as carbon black and silicic acid.

A preferred vulcanizing agent is elemental sulphur. But also sulphur donors such as thiurams may be used.

Of the well-known vulcanization accelerators mentioned with reference to the state of the art the following are of particular importance to the present invention: dithiocarbamates, thiurams, guanidines, sulphenamides and thiazols, more particularly dibenzothiazyldisulphide (MBTS), benzothiazyl-2- cyclohexyl sulphenamide (CBS), di-orthotolyl guanidine (DOTG) and zinc-N-dibenzyl dithiocarbamate (ZBEC).

Whether and in what proportions these well-known vulcanization accelerators will be needed in addition to the polyethers will be very much dependent on the type of rubber and the filler.

Vulcanization may further be considerably accelerated if to the accelerator system of a polyether and a well-known vulcanization accelerator there is added a silane. As a result, not only the vulcanization time is drastically reduced, but the cross-linking density is very much increased. For mixtures filled with silicic acid the following accelerator system has been found very satisfactory: CBS/DOTG, mercaptosilane and a polyether of the general formula I wherein

Z = -O-,
a = 5 to 115,
b = 0,
c = 1 and d = 2.
$R_1$ = H,
$R_2$ = an alkyl radical having 10 carbon atoms, and
X = H.

The present invention not only consists in the fortunate choice of the nature and the concentration of the starting materials for the vulcanization process, but also in carrying out the process as follows: the rubber chemicals are not added to the rubber separately but collectively in the form of a granulate; this is followed by vulcanization under normal conditions.

This so-called master batch consists of:

1 to 8 % by weight of the polyether,
3 to 10% by weight of polynorborons or
3 to 25% by weight of saturated ethylene/propylene copolymerisate or an elastomer of unsaturated ethylene/propylene/tert. monomers-polymers, particularly with cyclopentadiene as third monomer and
82 to 95% by weight of other usual rubber chemicals, particularly vulcanization accelerators, anti-agers, sulphur and/or zinc oxide,

the precentages by weight being based on the total vulcanization mixture.

Of advantage are the following master batch recipes:

| Substances | Parts by weight |
|---|---|
| 1. EPDM | 20,0 |
| accelerator | 75,0 |
| oil | 3,0 |
| polyether 1) | 2,0 |
| 2. polynorboron rubber | 4,0 |
| Perkacit TDEC grs | 93,5 (80%) |
| oil | 1,0 |
| polyether 1) | 1,5 |

1) More particularly, polyether of the general formula I wherein Z = -0-, a = 5 to 115, b = 0 to 15, c = 1 to 12, $R_1$ = H and $R_2$ = alkyl radical having 6 to 32 carbon atoms.

With this method not only the disadvantages to powdered additives are avoided, such as agglutination during storage, and the long time needed to obtain a sufficiently uniform distribution, but also the nuisance or even hazards to health caused by dust.
The present method is therefore also of advantage, if instead of in the reduced proportion as indicated above, the well-known accelerator is to be employed in the usual way and amount.

The above-mentioned master batch recipe also does away with the disadvantages to the kind of recipes known to be used up to now.

The granulate according to the invention, particularly when used with unsaturated ethylene-propylene-diene-polymers (EPDM) as binder, displays high storage and transport stability. This is partly due to the olefinically unsaturated groups contained in EPDM. Particularly surprising is that before the actual vulcanization process there does not take place any pre-crosslinking of the polymer chain of the EPDM, which pre-crosslinking has a detrimental effect on the processing properties. On the other hand, there is the advantage that later on in the vulcanization process the polymer is also cross-linked and not only embedded as

thermoplastic additive in the vulcanizate, as in the case of, e.g., DT 21 23 214, where use is made of a saturated ehtylene-propylene copolymerisate.

Further, the granulates according to the invention do not display any remaining stickiness.

A further advantage to the granulate mixtures according to the invention is that the respective chemicals can be excellently worked up in the rubber mass. Their use not only results in a saving on time but also on energy because of the lower viscosity, and particularly on the required amount of rubber chemicals. As compared with commercial products the time needed for working up the granulates of the invention is at least up to 50% and that of the accelerator matter at least 5% shorter, based on the weight of the granulate. The available commercial products may contain, e.g., 80% accelerator; for the same effect the ganulates of the present invention only need 75% accelerator.

The present invention offers many advantages: The use of polyethers in order to influence the vulcanization reaction is not only less dangerous to health; it also offers interesting advantages in the field of the art. The polyethers along with, for instance, silicic acid, constitute excellent cross-linking accelerators, particularly together with mercaptosilane, for styrolbutadiene rubber (SBR).
In the presence of relatively small proportions of well-known vulcanization accelerators they can be used for cross-linking both unfilled and carbon black-filled rubber, particularly natural rubber. On the ground of these advantages the vulcanization method according to the invention is particularly suitable for the manufacture of articles such as balloons, baby dummies, preservatives and safety gloves.

The invention will be illustrated in the following examples. In them also a description is given of preferred embodiment of the inventions.

1. Preparation of the copolyether used according to the invention

a) Into a 2 l-three-necked flask there are charged 0,44 moles of polyethylene glycol having an average molecular weight of 2000

along with 0,02 moles of KOH (45%-aqueous) and melted under nitrogen, followed by evacuation at about 6,65 kPa and heating to about 100°C, at which temperature the mixture is kept under a vacuum for 30 minutes. After removal of the vacuum by introducing nitrogen the contents of the flask are heated for 30 minutes to 180°C while keeping up the passage of nitrogen. At 180°C 2 moles of epoxydodecane are added over a period of 1 hour, followed by post-reaction for 1,5 hours. The resulting product has a pale-yellowish colour, a melting point of about 40° and an average molecular weight of 3000.

b) Analogous with a) a polyether is prepared from 1 mole of polyethylene glycol having an average molecular weight of 1000 and 2 moles of epoxydodecane.

c) Analogous with a) a polyether is prepared from 1 mole of polyethylene glycol having an average molecular weight of 1000 and 4,5 moles of epoxydodecane.

d) In a three-necked flask provided with a stirrer, a reflux condenser, a thermometer and a gas inlet tube the alcohol ethoxylate is melted under a nitrogen atmosphere and mixed with 0,5% of a 45%-aqueous potassium hydroxide solution. The mixture is heated to 60°C for half an hour while nitrogen is passed through, after which a vacuum is applied using a water-jet pump, followed by heating for 30 minutes to 100°C, which temperature is maintained for 30 minutes, after which the vacuum is removed and the mixture heated for 30 minutes to 180°C and epoxyalkane is added dropwise over a period of 1 hour. After a post-reaction of 2 hours the reaction is stopped. The reaction product is cooled down to 100°C and neutralized with 90%-lactic acid.

Under the above conditions products were prepared whose composition and properties are summarized in Table 1.

Table 1

| Product | Z | a | b | c | $R_2$ ($R_1$ = H) | average molecular weight | solidification point | density | appearance |
|---|---|---|---|---|---|---|---|---|---|
| A | $OCH_3$ | 22,39 | 0 | 7,35 | $C_{10}H_{21}$ | 1.750 | 25°C | 0,9454 g/cm³ at 50°C | yellowish paste |
| B | $OCH_3$ | 16,7 | 0 | 1,18 | $C_{10}H_{21}$ | 1.050 | 29 - 32,0°C | 1,0220 g/cm³ at 50°C | bright paste |
| C | $OCH_3$ | 22,39 | 0 | 1,43 | $C_{16}H_{33}$ | 1.350 | 38,5-40,5°C | 0,9850 g/cm³ at 70°C | white wax |
| D | $OC_3H_7$ | 22,39 | 2 | 7,35 | $C_{10}H_{21}$ | 1.850 | -- | 0,967 g/cm³ at 50°C | yellowish viscous liquid |

e) In a three-necked flask fitted with a stirrer and a reflux condenser 0,2 moles of a fatty alcohol ethoxylate of the general formula Alkyl-O-$(CH_2CH_2O)_aH$ are intermixed in the melt at 80°C with 0,5% of 90%-potassium hydroxide powder, (calculated on the total weight). The resulting mixture is kept at 80°C for 30 minutes under a stream of nitrogen. Subsequently, a water-jet-vacuum is applied (12 to 14 Torr) with the mixture being heated to 140°C, the vacuum being maintained for 30 minutes. After removing the vacuum with nitrogen 0,2 moles of epoxyalkane are added dropwise over a period of one hour. After a post-reaction of 2 hours the epoxide reaction is concluded. After being cooled down to 80°C the end product is brought to a pH = 6,5 to 7 with glacial acetic acid. The products obtained by this method and their properties are given in the following table.

Table 2

| Product | Alkyl | a | $R_2$ | average molecular weight | melting range | appearance |
|---|---|---|---|---|---|---|
| E | oleyl | 40 | decyl | 2450 | 44-45°C | yellowish wax |
| F | nonyl phenyol | 50 | decyl | 2150 | 43-45°C | brownish wax |
| G | tallow | 60 | dodecyl | 2800 | 48°C | bright wax |
| H | tallow | 80 | decyl | 3400 | 49-51°C | yellowish wax |

Tallow = mixed, saturated hydrocarbon radical having 16 to 18 carbon atoms

f) Into a 2-l glass autoclave there are introduced, with stirring, a g of water, b g of a saccharide and subsequently d g of aqueous 45%-KOH. Next, the mixture is heated to 75°C and nitrogen is applied 3 times at 5 bar.

Over a period of 3,5 hours c g of ethylene oxide are so introduced portionwise that when the reaction is exothermic the temperature will remain at 75°-80°C and the maximum pressure is 4 bar.

The reaction is allowed to continue for 3 hours at 75°-80°C.
Into a three-necked flask equipped with a stirrer, a thermometer, a reflux condenser, a gas inlet tube and a dropping funnel there are introduced e g of the ethoxylate obtained and heated under a stream of $N_2$ at 75°C. At this temperature $N_2$ is flushed through for 30 minutes, followed by heating for 15 minutes to 105°C under a stream of $N_2$.
Over a period of 2 hours f g of a long-chain epoxide are added dropwise under a moderate stream of $N_2$.
The reaction is allowed to continue for 3 hours at 110°C.

The products 1-5 obtained are given in the following table.

Table 3

| Starting saccharide | a (g) | b (g) | b (Mol) | c (g) | c (Mol) | d (g) | intermediate products |
|---|---|---|---|---|---|---|---|
| Saccharose | 250 | 684,6 | 2 | 704,8 | 16 | 30,43 | A Saccharose + 8 ÄO |
| Saccharose | 175 | 479,22 | 1,4 | 925,05 | 21 | 21,3 | B Saccharose + 15 ÄO |
| D-Sorbite | 133,59 | 400,77 | 2,2 | 775,28 | 17,6 | 17,81 | C D-Sorbit + 8 ÄO |
| Pentaerythrite | 136 | 136 | 1 | 352,4 | 8 | 6,04 | D Pentaerythrite + 8 ÄO |

| End product | intermediate products | | e (g) | e (Mol) | z | f (g) | f (Mol) |
|---|---|---|---|---|---|---|---|
| 1 | Saccharose + 8 ÄO | (A) | 1669,83 | 2 | 1-Epoxydodecane | 368 | |
| 2 | Saccharose + 15 ÄO | (B) | 1600,57 | 1,4 | 1-Epoxydodecane | 257,6 | 1,4 |
| 3 | D-Sorbite + 8 ÄO | (C) | 1327,45 | 2,2 | 1-Epoxydodecane | 404,8 | 2,2 |
| 4 | Pentaerythrite + 8 ÄO | (D) | 630,44 | 1 | 1-Epoxydodecane | 184 | 1 |
| (E) | Saccharose + 8 ÄO | (A) | 1669,83 | 2 | Propylene oxide | 464 | 8 |
| 5 | Saccharose + 8 ÄO + 4 PO | (E) | 2130 | 2 | 1-Epoxydodecane | 256 | 2 |

2. Vulcanization

For the preparation of the mixture use was made of standard methods as developed for the testing of additives of up to 10 phr (phr stands for: parts per hundred parts of rubber, i.e. per cent by weight, based on rubber).

The mixing equipment used comprised an internal mixer without floating weight (GK IV) and a laboratory roll or an internal mixer with floating weight and a laboratory roll.

The cross-linking process was followed in so-called rheometers. The rheometers comprise heated metal segments in the middle of which there is an oscillating disk moving through an angle of 1-3°, preferably at a rate of 100 oscillations per minute. The power input (torque in 11,5 x m) of the drive motor as a function of time is measured. The temperature was 150°C.

A) Carbon black-filled natural rubber (NR) was vulcanized using 2% by weight of the polyether in accordance with Example 1b) in the presence of the well-known vulcanization catalyst dibenzothiazyl disulphide (MBTS) in concentrations of 0,6, 0,4, 0,2 and 0,0% by weight (see Fig. 1, curves a, b, c and d). Moreover, MBTS was also used alone, namely in a concentration of 0,2% by weight (see curve e). The rheometer curves in Fig. 1 show:

- that the polyether alone also considerably accelerates the vulcanization process (curve d);
- that the polyether together with the well-known catalyst MBTS leads to a normal vulcanization process (see curve a), also when used in a concentration of less than 1,3% by weight;
- that also when the well-known catalyst is added in an amount of less than 0,3% by weight a suitable vulcanization is achieved (curve c); and
- that with the combination polyether/MBTS the increase in viscosity (increase in cross-linking density) is greater than the sum of the individual effects (compare curves e and d with c).

The usefulness of the vulcanizates obtained appears from the measured values given in Table 4.

Table 4

| Property | A tests | | | |
|---|---|---|---|---|
| | a | b | c | d |
| tensile strength MPa | 24,1 | 23,2 | 22,6 | 21,1 |
| elong. at rupture (%) | 528 | 546 | 542 | 517 |
| modulus 100%, MPa | 2,3 | 2,2 | 2,0 | 1,8 |
| modulus 300%, MPa | 10,7 | 10,0 | 9,7 | 9,2 |
| modulus 500%, MPa | 22,4 | 21,0 | 20,8 | 20,2 |
| hardness, Shore A | 66 | 66 | 65 | 62 |
| resilience (%) | 39 | 40 | 38 | 39 |
| impact strength, kN/m | 6,3 | 6,3 | 6,9 | 7,2 |
| abrasion, $mm^3$ | 106 | 111 | 100 | 112 |
| Mooney-scorch, min. | 3,9 | 3,9 | 4,4 | 5,7 |
| t 90, min. | 14,45 | 18,20 | 23,70 | 41,50 |
| t 100, min. | 29,75 | 33,90 | 46,25 | 67,25 |
| compression set, 24 h/RT, % | 6,81 | 5,26 | 6,56 | 6,55 |
| compression set, 24 h/70°C | 45,4 | 39,5 | 40,0 | 42,7 |

Notes on Table 4

Tensile strength of a vulcanizate in MPa

Elongation at rupture in %, i.e. the increase in length produced by stretching a test specimen to complete rupture.

Modulus, 100, 300 and 500% = the tension values in MPa attained upon, respectively, 100, 300 and 500% elongation of the test specimen.

Hardness = indentation depth obtained with a Shore tester, expressed in °Shore A.

Resilience, determined with a standard falling weight, in % of 90° ∢ divided on a logarithmic scale of 0-100%.

Notch impact strength, determined in kN/m on special test specimens (e.g. notched strips).

Abrasion indicated in a standard procedure as loss in volume (in $mm^3$) of a sample passed under pressure and for some test distance over a standard abrasive.

Compression set is determined by deformation (25%) of a cylindrical test specimen, loading it for some time at a particular temperature, after which it is relaxed and loss of original thickness is expressed in % compression set.

"Scorch" is the time in minutes in which under the conditions during the Mooney viscosity measurement the onset of vulcanization (solidification of the heated starting mixture) leads to a viscosity rise of 5 Mooney units above the minimum value.

t 90 = 90% vulcanization = time (in min) up to the 90% vulcanization which is considered adequate ensurance of the industrial manufacture of good quality products.

t 100 = 100% vulcanization. This analogous designation of time in min. is of importance only for the determination of the afore-mentioned times. Moreover, it is a measure of the resistance of a mixture to reversion (reversion = reduction of cross-linking spots as a result of the continued effect of heat).

B) Unfilled rubber was reacted with 2,5% by weight of the polyether of Example 1b) (see Fig. 2, curve 7) or with 0,1% by weight of the well-known vulcanization accelerator Zn-dibenzyl dithiocarbamate (ZBEC) (see curve 8) or with the two substances together (see curve 9). Further data on the composition of the vulcanization mixture are given in Table 5.

Figure 2 clearly shows the synergistic action between small amounts of the well-known accelerator ZBEC and the polyether used (compare the curves 7 and 8 with the curve 9).

Table 5

| materials | B tests | | |
|---|---|---|---|
| | 7 | 8 | 9 |
| SMR 5 | 100,0 | 100,0 | 100,0 |
| zinc oxide RS | 5,0 | 5,0 | 5,0 |
| stearic acid | 3,0 | 3,0 | 3,0 |
| sulphur | 2,0 | 2,0 | 2,0 |
| ZBEC | - | 0,1 | 0,1 |
| polyether of ex. 1b | 2,5 | - | 2,5 |

CLAIMS

1. Vulcanization of rubber with sulphur using a polyether and at least one conventional accelerator in an amount of less than 1,3% by weight, based on the rubber.

2. Vulcanization according to claim 1, characterized in that the usual accelerator is employed in an amount of 0,01 to 1,0, more particularly up to 0,3% by weight, based on the rubber.

3. Vulcanization according to claim 1 or 2, characterized in that the usual accelerator is selected from the following group of compounds: 2-mercaptobenzothiazole, dibenzothiazyl disulphide, zinc salt of 2-mercaptobenzothiazole, benzothiazyl-2-cyclohexyl sulphenamide, benzothiazyl-2-tert. butylsulphenamide, benzothiazyl-2-sulphene morpholide, benzothiazyl-dicyclohexylsulphenamide, diphenyl guanidine, di-orthotolyl guanidine, ortho-tolyl biguanide, tetramethyl thiuram disulphide, tetramethyl thiuram monosulphide, tetraethyl thiuram disulphide, dipentamethylene thiuram tetrasulphide, dipentamethylene thiuram hexasulphide, dihexamethylene thiuram tetrasulphide, dihexamethylene thiuram hexasulphide, zinc-N-dimethyl dithiocarbamate, zinc-N-diethyl dithiocarbamate, zinc-N-dibutyl dithiocarbamate, zinc-N-ethylphenyl dithiocarbamate, zinc-N-pentamethylene dithiocarbamate, ethylene thiourea, diethyl thiourea, diphenyl thiourea.

4. Vulcanization according to claim 1, 2 or 3, characterized in that the polyether is homogeneously distributed in the rubber and used in an amount of less than 9% by weight, based on the rubber.

5. Vulcanization according to claim 1, 2, 3 or 4, characterized in that the polyether is used together with up to 3% by weight, based on the rubber, of mercaptosilanes.

6. Vulcanization according to claim 1, 2, 3, 4 or 5, characterized in that the rubber used is chosen from the group of natural rubber, styrol-butadiene rubber, acrylonitrile-butadiene rubber, polychloroprene and/or ethylene-propylene rubber.

7. Vulcanization according to claim 1, 2, 3, 4, 5 or 6, characterized in that as a filler silicic acid or carbon black is used.

8. Vulcanization according to any one of the claims 1 to 7, characterized in that the polyether may be prepared from the monomers: ethylene oxide, propylene oxide and/or 1,2-alkylene oxide having 6 to 32 carbon atoms in the molecule.

9. Vulcanization according to any one of the claims 1 to 8, characterized in that the polyether is a homo- or blockpolyether of the following general formula:

$$Z\left[(-CH_2-CH_2-O)_a \quad (-CH_2-\overset{\overset{\large CH_3}{|}}{CH}-O)_b \quad (-\overset{\overset{\large R_1}{|}}{CH}-\overset{\overset{\large R_2}{|}}{CH}-O)_c-X\right]_d \qquad I$$

wherein Z represents a mono- or polyvalent alcohol group, more particularly a saccharide group, a phenol group or an alkyl phenol group, or is HO-, -O-, -S-, or an amine or amide group, and on average

a = 5 to 250,

b = 0 to 50,

c = 0 to 30,

d = 1 to 6,

X = H-, an alkyl, carbonyl, sylanyl or mercapto group,

$R_1$ = H- or, when $R_2 = CH_3$, $= CH_3-$,

$R_1$ and $R_2$ = alkyl groups with in all 6 to 32 carbon atoms,

$R_2$ = H-, a methyl or alkyl group with 6 to 32 carbon atoms or a group of the formula $-CH_2-O-R$, in which R is an alkyl group having 6 to 32 carbon atoms, a, b, c, X, $R_1$ and $R_2$ being chosen independently of each other for each molecular d group.

10. Vulcanization according to any one of the claims 1 to 9, characterized in that in the polyether of the general formula (I) on average

a = 5 to 115,

b = 0 to 15,

c = 1 to 12, and

$R_1$ = H

$R_2$ = an alkyl group having 6-32 carbon atoms.

11. Vulcanization according to any one of the claims 1 to 10, characterized in that on average

a = 5 to 80, preferably 6 to 45,

b = 0 to 5,

c = 1 to 10, preferably 1 to 3,

d = 1 to 6, preferably 1 to 3, and

$R_2$ = an alkyl group having 6 to 32, preferably 10 to 24 carbon atoms, when Z represents a saccharide group.

12. Vulcanization according to any one of the claims 1 to 10, characterized in that on average

a = 10 to 100, preferably 20 to 80,

b = 0 to 3,

c = 1 to 5, preferably 1 to 3,

d = 1, and

$R_2$ = an alkyl group having 6 to 32, preferably 10 to 18 carbon atoms, when Z represents a monovalent alcohol group.

13. Vulcanization according to any one of the claims 1 to 10, characterized in that on average

a = 10 to 100, preferably 10 to 80,

b = 0 to 3,

c = 1 to 5, preferably 1 to 3,

d = 3 to 6, and

$R_2$ = an alkyl group having 6 to 32, preferably 10 to 18 carbon atoms, when Z represents a polyvalent alcohol group having 3 to 6 hydroxyl groups.

14. Vulcanization according to any one of the claims 1 to 10, characterized in that on average

a = 5 to 100, preferably 10 to 80,

b = 0 to 3,

c = 1 to 5, preferably 1 to 3,

d = 1 to 4, and

$R_2$ = an alkyl group having 6 to 32, preferably 10 to 18 carbon atoms, when Z represents an amine and/or an amide group.

15. Vulcanization according to any one of the claims 1 to 10, characterized in that on average

a = 5 to 250,
b = 0 to 50,
$R_2$ = an alkyl group having 6 to 32 carbon atoms and
c = 0 to 20,
d = 1 or 2, when Z = -O- and/or -S-, or
c = 1 to 20,
d = 1 to 3, when Z = nitrogen, or
c = 1 to 30,
d = 1 to 3, when Z = hydrogen.

16. Vulcanization according to claim 9, characterized in that use is made of a homopolyether wherein Z = HO-, a = about 20, b = 0, c = 0, d = 1 and X = H.

17. Vulcanization according to claim 9, characterized in that use is made of a block polyether with Z = HO-, a = about 8, b = about 30, c = about 9, d = 1 and X, $R_1$ and $R_2$ = H.

18. Vulcanization according to claim 9, characterized in that use is made of a block polyether with Z = -O-, a = about 11, b = 0, c = 1, d = 2, $R_1$ and X = H and $R_2$ = an alkyl group having 10 to 14 carbon atoms.

19. Vulcanization according to any one of the claims 1 to 18, characterized in that the amine and/or amide groups in the polyethers are entirely or partly present in the form of their salt.

20. Vulcanization according to any one of the claims 1 to 19, characterized in that X is entirely or partly H.

21. Vulcanization according to any one of the claims 1 to 20, characterized in that the polyether has an average molecular weight in the range of from 1000 to 10 000.

22. Vulcanization according to any one of the claims 1 to 21, characterized in that the proportion of ethylene oxide and/or propylene oxide is 35 to 80 % by weight and the proportion of 1,2-alkylene oxide having 6 to 32 carbon atoms in the molecule 65 to 20% by weight.

23. Vulcanization according to any one of the claims 1 to 22, characterized in that the polyether contains one or more blocks of ethylene oxide and/or propylene oxide.

24. Vulcanization according to claim 23, characterized in that the average molcular weight of the blocks is in the range of 600 to 4000.

25. Vulcanization according to any one of the claims 1 to 24, characterized in that the vulcanization is terminated after not more than 10 minutes, more particularly 6 minutes.

26. Vulcanization according to any one of the claims 1 to 25, characterized in that the vulcanizing agents are first processed into a granulate of the following composition:

| | |
|---|---|
| 1 to 8 % | by weight of the polyether, |
| 3 to 10% | by weight of polynorborons or |
| 3 to 25% | by weight of saturated ethylene/propylene copolymerisate or an elastomer of unsaturated ethylene/propylene/tert. monomers polymers, particularly with cyclopentadiene as third monomer and |
| 82 to 95% | by weight of other usual rubber chemicals, particularly vulcanization accelerators, anti-agers, sulphur and/or zinc oxide, |

the precentages by weight being based on the total vulcanization mixture.

fig. 1

NR - mixed with carbon black

Temperature 150 °C

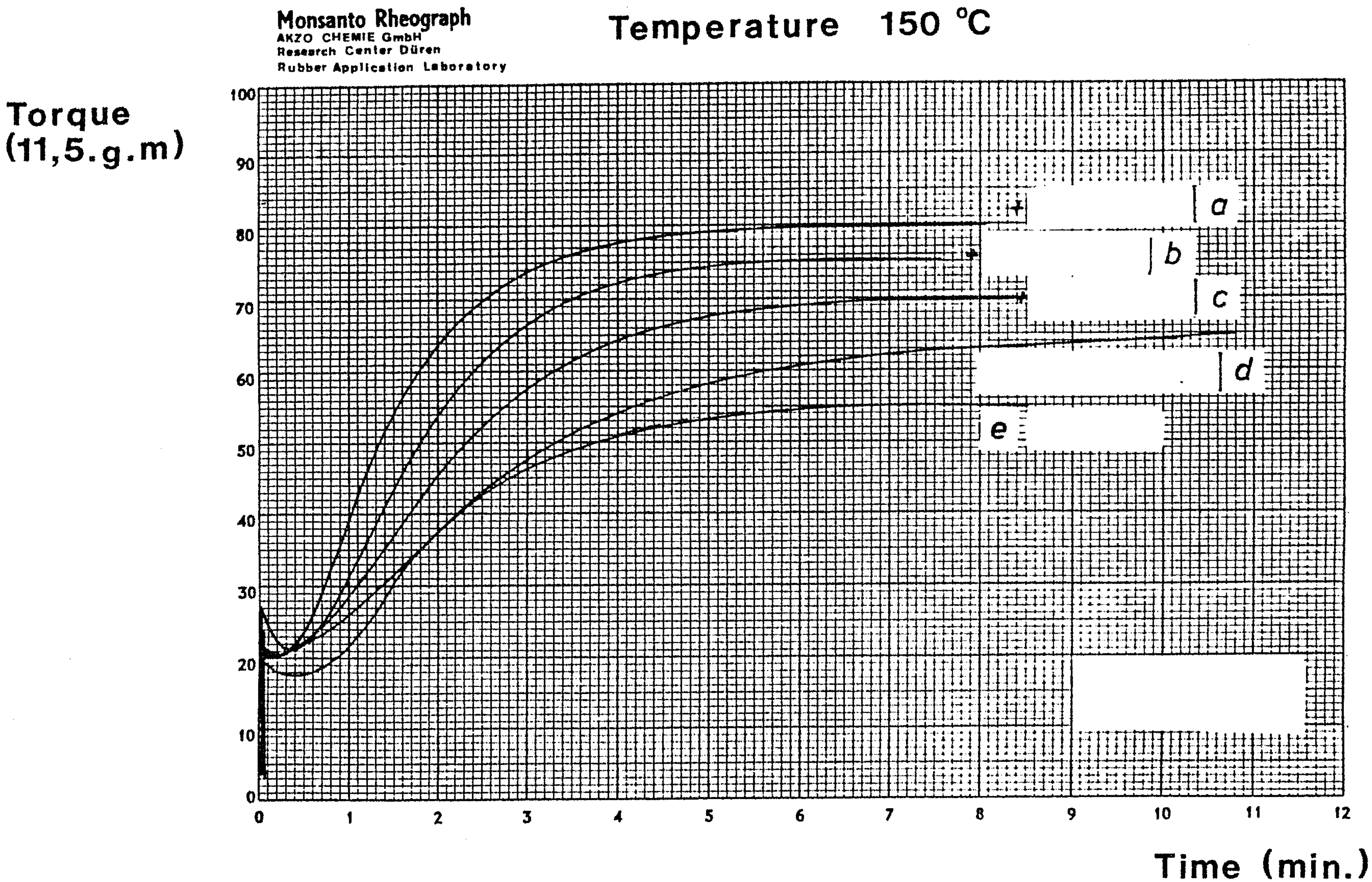

fig. 2

NR-mixture without filler

Temperature 150 °C

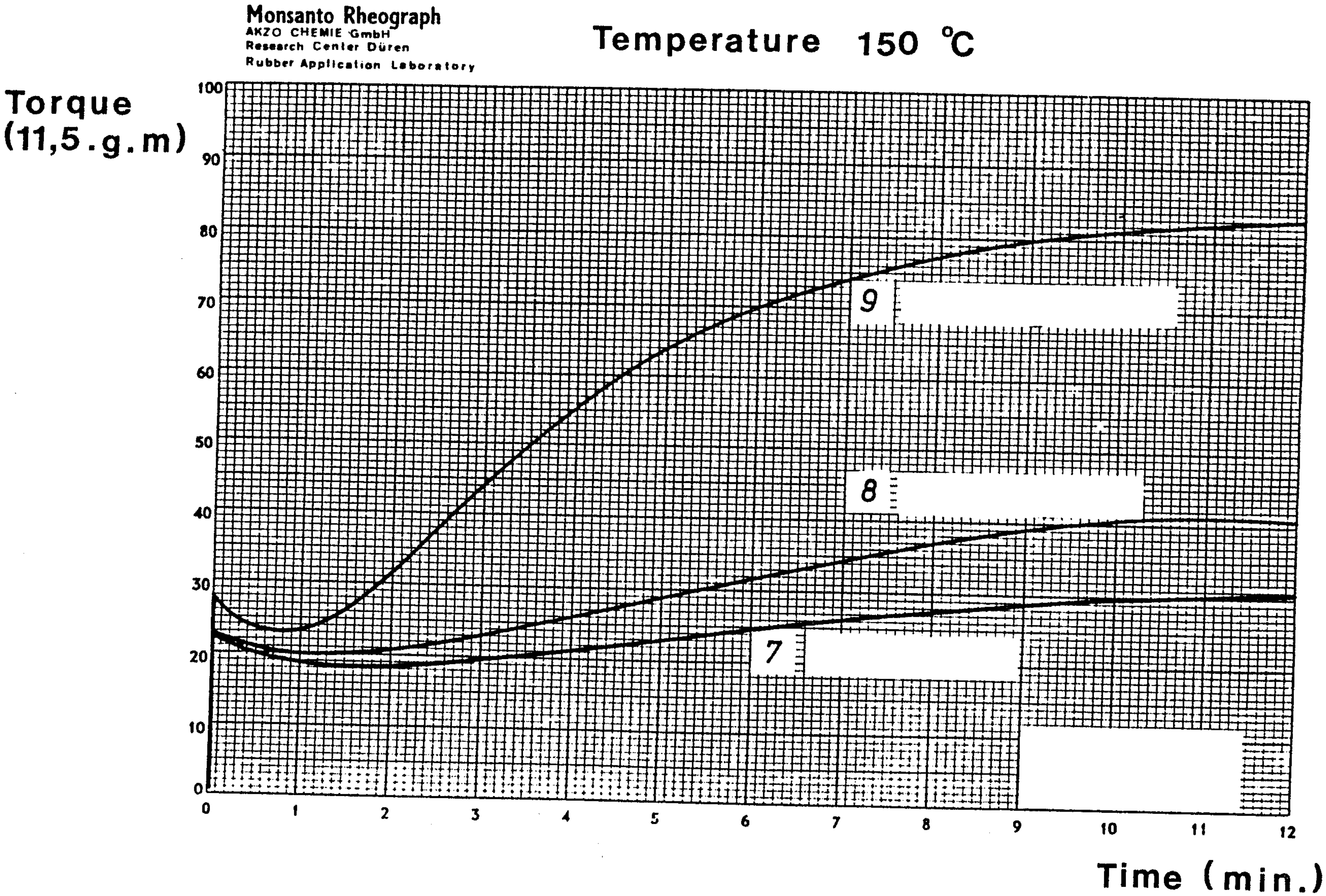

European Patent Office

# EUROPEAN SEARCH REPORT

0141473

Application number

EP 84 20 1587

| DOCUMENTS CONSIDERED TO BE RELEVANT | | | |
|---|---|---|---|
| Category | Citation of document with indication, where appropriate, of relevant passages | Relevant to claim | CLASSIFICATION OF THE APPLICATION (Int. Cl.4) |
| X | FR-A-2 417 522 (BRIDGESTONE TIRE COMPANY Ltd.)<br>* Examples * | 1-4, 6-9,21, 23-24 | C 08 L 21/00<br>C 08 J 3/22<br>//(C 08 L 21/00<br>C 08 L 71/00) |
| X | US-A-2 713 572 (G. E. HALL)<br>* Claim 10; column 3, line 61 * | 1,3-4, 6-9,21, 23-24 | |
| X | GB-A- 975 847 (MONSANTO CHEMICALS)<br>* Claims 1,8; page 2, lines 24-50 * | 1,26 | |
| D,A | US-A-4 312 768 (NASSRY et al.)<br>* Claim 1 * | 9-15, 17-18 | TECHNICAL FIELDS SEARCHED (Int. Cl.4)<br>C 08 L<br>C 08 K<br>C 08 J |
| A | FR-A-2 372 192 (RHONE-POULENC INDUSTRIES)<br>* Page 4, table, compositions 4,5,6 * | 5,16 | |
| A | F.R. EIRICH: "Science and technology of rubber". 1978, pages 297-298, Academic Press, New York, (US).<br>* Page 298, table 1 * | 2 | |

The present search report has been drawn up for all claims

| Place of search | Date of completion of the search | Examiner |
|---|---|---|
| THE HAGUE | 11-02-1985 | VAN HUMBEECK |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document